# FASCICULE DE BREVET EUROPEEN

(11) **EP 1 359 442 B1**
(45) Date de publication et mention de la délivrance du brevet: **13.06.2007**
(21) Numéro de dépôt: 03290868.3
(22) Date de dépôt: 08.04.2003
(51) Int. Cl.: G02B 6/02, G02B 6/12, H04J 14/02

(54) **Filtre complexe apodisé**
Apodisierter komplexer Filter
Apodised complex filter

(30) Priorité: 29.04.2002 FR 0205376
(43) Date de publication de la demande: 05.11.2003
(73) Titulaire: Avanex Corporation, Fremont, CA 94538 (US)
(72) Inventeur: Molina, Marianne, 75013 Paris (FR); De Barros, Carlos, 92100 Boulogne-Billancourt (FR); Riant, Isabelle, 91400 Orsay (FR)
(74) Mandataire: Feray, Valérie

(56) Documents cités:
- EP-A- 0 897 124
- US-A- 3 814 498
- US-A- 6 005 999
- US-B1- 6 314 220
- US-B1- 6 317 539
- RIANT I ET AL: "GAIN EQUALIZATION WITH OPTIMIZED SLANTED BRAGG GRATING ON ADAPTED FIBRE FOR MULTICHANNEL LONG-HAUL SUBMARINE TRANSMISSION" OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999, OPTICAL FIBER COMMUNICATION CONFERENCE / INTERNATIONAL CONFERENCE ON INTEGRATED OP, 21 février 1999 (1999-02-21), pages THJ6-1-THJ6-3, XP000967012 ISBN: 0-7803-5430-3
- LIU Y ET AL: "FABRICATING FIBRE EDGE FILTERS WITH ARBITRARY SPECTRAL RESPONSE BASED ON TILTED CHIRPED GRATING STRUCTURES" MEASUREMENT SCIENCE AND TECHNOLOGY, IOP PUBLISHING, BRISTOL, GB, vol. 10, no. 1, janvier 1999 (1999-01), pages L01-L03, XP000877675 ISSN: 0957-0233

## Description

La présente invention concerne le domaine des filtres optiques constitués de réseaux de Bragg photo-inscrits dans des guides d'onde. L'invention concerne plus particulièrement des filtres égaliseurs de gain.

Les filtres égaliseurs de gain, connus également sous l'acronyme de GFF pour Gain Flattening Filter en anglais, sont constitués en général par des réseaux de Bragg photo-inscrits sur des portions de guides d'onde tels que des fibres optiques ou des guides planaires. Un guide d'onde est classiquement composé d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur n₁ et de la gaine n₂ sont tels que n₁>n₂. Comme cela est bien connu, la propagation d'un signal optique dans un guide d'onde monomode se décompose en un mode fondamental guidé dans le coeur et en des modes secondaires guidés sur une certaine distance dans l'ensemble coeur-gaine optique, appelés également modes de gaine.

Le coeur et/ou la gaine du guide peuvent être dopés de manière à être rendus photosensibles pour une inscription de réseau de Bragg, par exemple avec du germanium (Ge). Les réseaux classiquement utilisés pour des égalisations de gain sont des réseaux en angle ou réseaux inclinés, connus sous le terme de SBG pour Slanted Bragg Grating en anglais, ou des réseaux à long pas, connus sous le terme de LPG pour Long Period Grating en anglais. De tels réseaux sont non réflecteurs et sont conçus pour permettre un couplage du mode fondamental dans les modes de gaine. Il est ainsi possible de s'affranchir des isolateurs optiques indispensables lorsque l'égalisation de gain est réalisée avec des réseaux réflecteurs tels que les réseaux de Bragg droits.

Les filtres égaliseurs de gain sont associés à des amplificateurs optiques répartis régulièrement le long de lignes de transmission. Les amplificateurs optiques ne fournissent généralement pas une amplification égale pour toutes les longueurs d'onde des signaux transmis sur les différents canaux d'une même ligne de transmission.

En particulier, avec le développement des applications de transmission dense par multiplexage en longueur d'onde (DWDM, pour Dense Wavelength Division Multiplexing), les disparités d'amplification sur une bande passante donnée ont tendance à s'accentuer et les tolérances des égaliseurs de gain deviennent de plus en plus faibles, c'est à dire que le filtre égaliseur doit épouser au plus près la courbe d'amplification. Ainsi, les applications DWDM nécessitent la réalisation de filtres de plus en plus étroits présentant des contrastes de plus en plus accentués.

Les profils d'égalisation de gain deviennent donc de plus en plus complexes et les contraintes de fabrication poussent à minimiser le nombre d'inscriptions de réseaux par filtre.

Dans le cas des réseaux inclinés (SBG) pour des applications d'égalisation de gain telles que présentées précédemment, différentes solutions d'inscription de ces réseaux sont envisageables pour réaliser un filtre égaliseur complet.

Une première solution connue consiste à inscrire différents SGB sur différents guides d'onde pour constituer des filtres dits élémentaires adaptés chacun à une portion de la bande spectrale d'amplification à égaliser. Plusieurs SBG sont alors sélectionnés, en fonction de l'égalisation recherchée, et associés les uns aux autres pour former un filtre dit complexe. En général, les différents SBG sont assemblés par soudure des différents guides d'onde. Une telle technique n'est cependant pas optimale car les soudures des différents filtres élémentaires introduisent des pertes d'insertion importantes.

Pour pallier cet inconvénient, il a été proposé d'inscrire les différents réseaux en angle sur différentes portions d'un même guide d'onde. Une telle solution est décrite dans la demande de brevet WO 93/24977. Le graphe de la figure 1 illustre le spectre des pertes de huit SBG uniformes inscrits avec un angle de 8° sur une même portion de guide pour former un filtre complexe dont la réponse spectrale est la somme des réponses spectrales de chaque SBG. Selon le contraste apporté à chaque réseau, il est ainsi possible de modeler la réponse du filtre complexe.

Cette solution nécessite cependant autant d'inscriptions à travers autant de masques de phase que de filtres élémentaires. Plus le profil d'égalisation de gain est complexe, plus le nombre d'inscriptions de SBG élémentaires nécessaires à la réalisation du filtre égaliseur complet est important, ce qui alourdit la fabrication de tels filtres.

US6314220 décrit un guide d'onde capable de produire signal optique réfléchi présentant un profil spectral correspondant au produit d'un profil spectral d'un signal optique d'entrée et d'une fonction de la variable complexe de filtrage spectral prédéterminée où le guide d'onde inclut une pluralité de sous réseaux spatialement séparés possédant chacun une matrice périodique d'éléments de diffraction. Les sous réseaux sont situés et configurés sur la base de la fonction de la variable complexe de filtrage spectral prédéterminée.

Afin de répondre aux problèmes de l'art antérieur précédemment exposés, il faudrait un filtre égaliseur de gain, ayant un profil spectral complexe, qui présente des pertes d'insertion réduites et dont la réalisation soit compatible avec les contraintes industrielles de masse.

A cet effet, il est proposé d'inscrire une pluralité de réseaux en angle à travers un unique masque de phase fortement chirpé, c'est à dire dont le pas varie fortement le long du masque. Ces réseaux élémentaires peuvent être inscrits en une seule étape sur une même portion de guide optique pour former un filtre complexe, ce qui permet de réduire considérablement les étapes de fabrication du filtre égalisateur complet et améliore la qualité optique du filtre en diminuant les pertes d'insertion.

Cependant, une telle méthode d'inscription de réseaux en angle à travers un unique masque fortement chirpé présente certains inconvénients.

En effet, lors de l'inscription d'un filtre quelconque, on induit intrinsèquement dans le guide optique, d'une part une modulation de l'indice de réfraction dépendant de l'amplitude des franges d'interférence, et d'autre part un indice de réfraction moyen dépendant de la visibilité des franges différente de 1. Le contraste d'un filtre élémentaire constitué d'un réseau inscrit est directement lié à la combinaison de ces deux composantes. Ainsi deux filtres élémentaires peuvent présenter le même contraste avec une « combinaison » différente de la modulation de l'indice de réfraction et de l'indice moyen de réfraction.

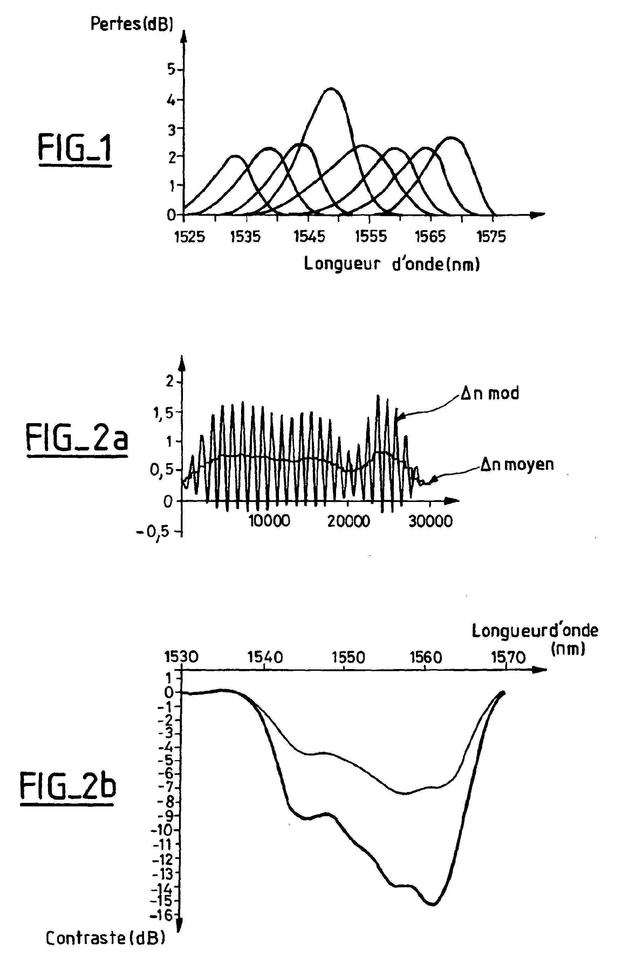

En particulier, lorsque l'on inscrit une pluralité de réseaux concaténés, la densité d'énergie n'est généralement pas constante pour chacun des réseaux. Un tel effet est illustré sur la figure 2a qui représente la modulation d'indice Δn_{mod} et l'indice de réfraction moyen Δn_{moyen} le long du filtre. Comme illustré sur la figure 2a, l'indice de réfraction moyen Δn_{moyen} n'est pas constant le long du filtre. Cela a pour conséquence d'entraîner des évolutions différentes avec le temps des différentes composantes spectrales du filtre. Ces évolutions sont en outre difficilement prédictibles et peuvent entraîner des modifications substantielles du profil spectral du filtre qui n'est alors plus du tout adapté à l'égalisation de l'amplification des canaux DWDM de transmission pour laquelle il était destiné. Cette déformation du profil spectral avec le temps est particulièrement visible lors de l'étape de déverminage, connue sous le terme anglais de « annealing », comme illustré sur le graphe de la figure 2b qui représente la réponse spectrale du filtre, avant (trait gras) et après (trait fin) l'étape de déverminage. En effet, lors du déverminage on fait artificiellement vieillir le filtre pour stabiliser sa réponse spectrale et pour cela, on fait varier chacune des deux composantes (modulation de l'indice de réfraction Δn_{mod} et indice de réfraction moyen Δn_{moyen}) pour aboutir alors à deux combinaisons différentes qui donnera un contraste et un décalage en longueur d'onde différents pour chacun des filtres élémentaires.

L'objet de l'invention est de répondre à ce problème de la variation de l'indice de réfraction moyen du filtre égaliseur, et de proposer un filtre complexe présentant un indice de réfraction moyen constant.

A cet effet, l'invention propose de réaliser un filtre égaliseur de gain composé d'une concaténation de filtres élémentaires, chaque filtre élémentaire étant constitué d'un réseau de Bragg en angle à pas variable apodisé de manière contrôlée afin d'obtenir un indice de réfraction moyen uniforme, ledit indice de réfraction moyen étant en outre constant sur l'ensemble des réseaux concaténés.

Un tel filtre peut être obtenu grâce à des irradiations successives de réseaux de Bragg en angle à travers un unique masque de phase chirpé. Chaque irradiation d'une zone donnée du masque de phase permet de réaliser un filtre élémentaire correspondant à une portion spectrale du filtre égaliseur complexe. Chaque filtre élémentaire est inscrit de manière contrôlée, c'est à dire est apodisé, afin d'avoir le même temps d'irradiation et ainsi le même indice de réfraction moyen, et cela malgré des contrastes différents de chacun desdits filtres élémentaires.

Le filtre égaliseur selon l'invention présente donc l'avantage d'être réalisé par une inscription à travers un unique masque de phase, ce qui permet un contrôle de l'apodisation de chaque portion élémentaire du filtre et permet d'éviter une modification du profil spectral du filtre suite à l'étape de déverminage.

La présente invention concerne plus spécifiquement un filtre optique selon la revendication 1.

Selon une caractéristique, la variation du pas entre les différents réseaux est linéaire sur l'ensemble de la concaténation.

Selon une caractéristique, chaque filtre élémentaire de la concaténation est apodisé avec un indice de réfraction moyen uniforme, ledit indice de réfraction moyen étant constant sur l'ensemble des réseaux de la concaténation.

L'invention concerne également une méthode d'inscription d'un filtre optique selon la revendication 5.

Les particularités et avantages de la présente invention apparaîtront plus clairement à la lecture de la description qui suit, donnée à titre d'exemple illustratif et non limitatif, et faite en référence aux figures annexées dans lesquelles :
- la figure 1, déjà décrite, illustre schématiquement un filtre égaliseur de gain obtenu par une technique de l'art antérieur ;
- la figure 2a, déjà décrite, est un graphe de la modulation d'indice de réfraction et de l'indice de réfraction moyen d'un filtre selon un premier mode de réalisation de l'invention ;
- la figure 2b, déjà décrite, est un graphe illustrant l'évolution de la réponse spectrale d'un filtre selon un premier mode de réalisation de l'invention avant et après l'étape de déverminage ;
- la figure 3 illustre schématiquement l'inscription d'un filtre égaliseur de gain selon la présente invention ;
- la figure 4 est un graphe illustrant les composantes spectrales d'un filtre selon l'invention ;
- la figure 5a est un graphe de la modulation d'indice de réfraction et de l'indice de réfraction moyen d'un filtre selon un deuxième mode de réalisation de l'invention ;
- la figure 5b est un graphe illustrant la stabilité de la réponse spectrale d'un filtre selon un deuxième mode de réalisation de l'invention avant et après l'étape de déverminage ;
- la figure 6 est un schéma illustrant une méthode de fabrication du filtre selon l'invention.

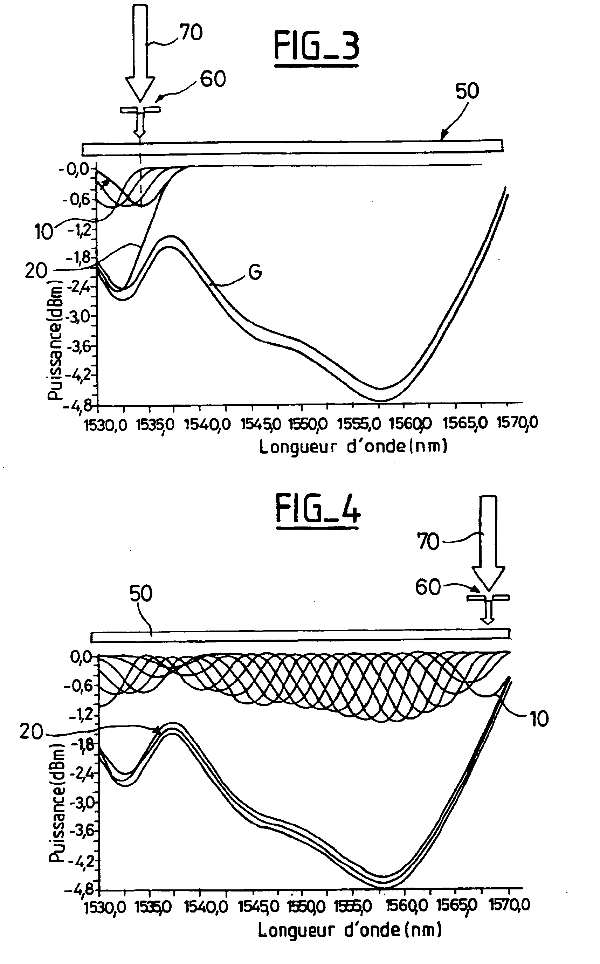

Le filtre selon l'invention, tel qu'il est schématiquement illustré sur les figures 3 et 4, est composé d'une concaténation de filtres élémentaires 10 inscrits sur une portion continue d'un guide d'onde optique à travers un unique masque de phase 50 chirpé, c'est à dire dont le pas varie le long du masque.

Le guide d'onde comportant le filtre selon l'invention peut être une fibre optique ou un guide d'onde réalisé en technologie planaire.

Selon une caractéristique essentielle de l'invention, la concaténation des filtres élémentaires s'effectue sans changement de masque, mais simplement par un déplacement d'une fente 60 le long du masque chirpé et du guide optique.

Tous les filtres élémentaires 10 ont donc le même angle et une longueur identique, définie par la largeur de la fente, et une même variation du pas définie par le masque de phase utilisé. En outre, la variation du pas entre les différents réseaux est linéaire sur l'ensemble de la concaténation.

Avantageusement, le taux de la variation du pas ou le « chirp rate » du masque est déterminé de manière à couvrir toute la largeur spectrale d'égalisation souhaitée tout en ayant une longueur de filtre raisonnable, c'est à dire limitée à 30-40mm. Par exemple, une variation linéaire du pas du masque de 10nm/cm, avec un déplacement de la fente 60 compris entre 1 et 5 mm entre deux inscriptions consécutives, est adaptée à une égalisation de gain sur la bande C.

La position du faisceau d'inscription 70 sur le masque définit la longueur d'onde centrale de chaque filtre élémentaire 10 et le contraste de chacun desdits filtres élémentaires est fixé par la combinaison des composantes de la modulation de l'indice Δn_{mod} et de l'indice de réfraction moyen Δn_{moyen}, tel qu'expliqué précédemment.

Ainsi, par la concaténation de ces filtres élémentaires 10, il est possible d'obtenir un filtre égaliseur complexe 20 dont la réponse spectrale est la somme des réponses spectrales des filtres élémentaires 10 concaténés et qui peut répondre à un gabarit G d'égalisation complexe.

Selon une caractéristique de l'invention, chaque filtre élémentaire est en outre apodisé avec un indice de réfraction moyen uniforme, ledit indice de réfraction moyen étant constant sur l'ensemble des réseaux de la concaténation.

L'indice de réfraction moyen Δn_{moyen} est figé constant pour chaque filtre élémentaire 10 en imposant une apodisation différente pour chaque filtre élémentaire afin de garantir le même temps d'irradiation quel que soit le contraste du filtre élémentaire. Une telle opération est possible car, selon l'invention, les filtres élémentaires sont inscrits à travers un même masque de phase.

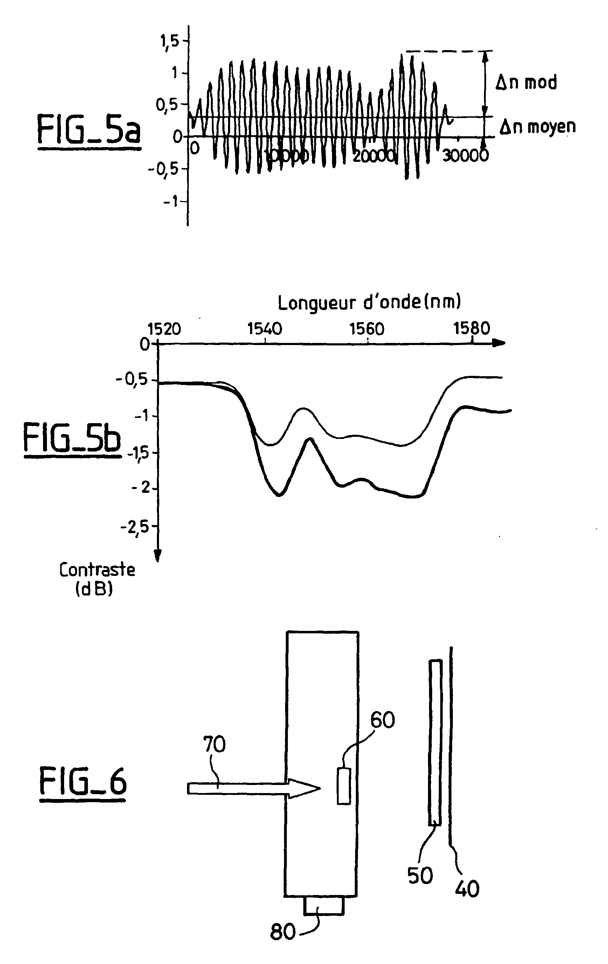

L'indice de réfraction moyen Δn_{moyen} rendu constant le long du filtre complexe, tel qu'illustré sur le graphe de la figure 5a, a pour conséquence de stabiliser l'évolution avec le temps des différentes composantes spectrales du filtre et de permettre une évolution quasi homothétique de la réponse spectrale du filtre complexe avec l'étape de déverminage, tel qu'illustré sur le graphe de la figure 5b.

Il existe différentes méthodes d'apodisation de filtres. Par exemple, une technique connue, illustrée sur la figure 6, consiste à utiliser un support de translation 80 pour faire vibrer le masque 50 devant le faisceau d'inscription 70. Le support de translation 80 peut être actionné par des piézos par exemple. Le déplacement relatif du masque 50 et de la fibre 40 pendant l'inscription du réseau élémentaire sur le guide optique 40 permet un contrôle de l'efficacité d'inscription de chaque filtre élémentaire et entraîne une uniformisation de la densité d'énergie reçue par le filtre complexe lors de l'irradiation du guide 40 par le faisceau laser 70.

Il existe également d'autres techniques d'apodisation à la disposition de l'homme du métier, comme par exemple des masques apodisés conçus pour uniformiser la densité d'énergie reçue par le guide dans la zone d'inscription du réseau. C'est cette uniformisation de l'énergie reçue par le guide optique dans la zone d'inscription qui permet d'obtenir un indice de réfraction moyen Δn_{moyen} uniforme sur la longueur du réseau élémentaire inscrit.

Or, selon l'invention, les différents réseaux élémentaires sont inscrits à travers le même masque de phase 50 par un déplacement de la fente 60. Ainsi, l'apodisation de tous les réseaux élémentaires de la concaténation du filtre complexe peut être contrôlée de manière à ce que l'indice de réfraction moyen Δn_{moyen} de chaque réseau élémentaire soit constant sur toute la longueur du filtre concaténé.

## Revendications

1. Filtre optique (20) composé d'une concaténation de filtres élémentaires (10) de réseaux de Bragg en angle à pas variable inscrits sur une portion continue d'un guide d'onde optique (40), où les différents réseaux de la concaténation présentent le même angle, une longueur identique et une variation du pas linéaire, **caractérisé en ce que** chaque filtre élémentaire (10) de la concaténation est apodisé avec un indice de réfraction moyen (Δn_{moyen}) uniforme, ledit indice de réfraction moyen étant constant sur l'ensemble des réseaux de la concaténation.

2. Filtre optique selon la revendication 1, **caractérisé en ce que** la variation du pas entre les différents réseaux est linéaire sur l'ensemble de la concaténation.

3. Filtre optique selon l'une des revendications 1 à 2, **caractérisé en ce que** le guide d'onde optique est une fibre optique (40).

4. Filtre optique selon l'une des revendications 1 à 2, **caractérisé en ce que** le guide d'onde optique est un guide d'onde planaire.

5. Méthode d'inscription d'un filtre optique (20) sur une portion de guide d'onde optique, où une pluralité de filtres élémentaires (10) constitués de réseaux de Bragg en angle à pas variable sont inscrits à travers un unique masque de phase à pas variable (50) de manière à former le filtre optique par concaténation desdits filtres élémentaires, chaque réseau étant inscrit à travers une fente (60) déplacée le long du masque de phase (50), **caractérisée en ce que** chaque filtre élémentaire (10) de la concaténation est apodisé avec un indice de réfraction moyen (Δn_{moyen}) uniforme, ledit indice de réfraction moyen étant constant sur l'ensemble des réseaux de la concaténation et **en ce que** l'inscription de chaque réseau constituant un filtre élémentaire est apodisée.

6. Méthode d'inscription d'un filtre optique selon la revendication 5, **caractérisé en ce que** le déplacement de la fente (60) est compris entre 1 et 5 mm entre deux inscriptions consécutives.

7. Système optique d'égalisation de gain comprenant un filtre optique selon l'une des revendications 1 à 4.

## Claims

1. An optical filter (20) made up of a concatenation of elementary chirp slanted Bragg grating filters (10) written on a continuous portion of an optical waveguide (40), in which the various gratings of the concatenation present the same angle, identical length, and linear chirp, the filter being **characterized in that** each elementary filter (10) of the concatenation is apodised with a uniform mean refractive index (Δnₘₑₐₙ), the mean refractive index being constant over all the gratings of the concatenation.

2. An optical filter according to claim 1, **characterized in that** the chirp between the various gratings is linear over the entire concatenation.

3. An optical filter according to claim 1 or claim 2, **characterized in that** the optical waveguide is an optical fiber (40).

4. An optical filter according to claim 1 or claim 2, **characterized in that** the optical waveguide is a planar waveguide.

5. A method of writing an optical filter (20) over a portion of optical waveguides, in which a plurality of elementary filters (10) made up of chirp slanted Bragg gratings are written through a single chirp phase mask (50) so as to form the optical filter by concatenating said elementary filters, each grating being written through a slot (60) moved along the phase mask (50), the method being **characterized in that** each elementary filter (10) of the concatenation is apodized with a uniform mean refractive index (Δnₘₑₐₙ), said mean refractive index being constant over all the gratings of the concatenation, and **in that** the writing of each grating constituting an elementary filter is apodised.

6. A method of writing an optical filter according to claim 5, **characterized in that** the movement of the slot (60) lies in the range 1 mm to 5 mm between two successive writing operations.

7. An optical gain flattening system including an optical filter according to any one of claims 1 to 4.

## Patentansprüche

1. Optisches Filter (20), zusammengesetzt aus einer Verknüpfung elementarer Filter (10), die aus in einen zusammenhängenden Abschnitt eines Lichtwellenleiters (40) eingeschriebenen, im Winkel angeordneten Bragg-Gittern mit variierender Gitterperiode bestehen, bei dem die verschiedenen Gitter der Verknüpfung denselben Winkel, eine identische Länge und eine lineare Änderung der Gitterperiode aufweisen, **dadurch gekennzeichnet, dass** jedes elementare Filter (10) der Verknüpfung mit einem einheitlichen mittleren Brechungsindex (Δnₘᵢₜₜₑₗ) apodisiert wird, wobei der mittlere Brechungsindex über die Gesamtheit der Gitter der Verknüpfung konstant ist.

2. Optisches Filter nach Anspruch 1, **dadurch gekennzeichnet, dass** die Änderung der Gitterperiode zwischen den verschiedenen Gittern über die gesamte Verknüpfung linear ist.

3. Optisches Filter nach einem der Ansprüche 1 bis 2, **dadurch gekennzeichnet, dass** der Lichtwellenleiter eine optische Faser (40) ist.

4. Optisches Filter nach einem der Ansprüche 1 bis 2, **dadurch gekennzeichnet, dass** der Lichtwellenleiter ein planarer Lichtwellenleiter ist.

5. Verfahren zum Einschreiben eines optischen Filters (20) in einen Abschnitt eines Lichtwellenleiters, bei dem eine Vielzahl von elementaren Filtern (10), die aus im Winkel angeordneten Bragg-Gittern mit variierender Gitterperiode bestehen, durch eine einzige Phasenmaske mit variierender Periode (50) so eingeschrieben werden, dass sie durch Verknüpfung der elementaren Filter das optische Filter bilden, wobei jedes Gitter durch einen entlang der Phasenmaske (50) bewegten Spalt (60) eingeschrieben wird, **dadurch gekennzeichnet, dass** jedes elementare Filter (10) der Verknüpfung mit einem einheitlichen mittleren Brechungsindex (Δnₘᵢₜₜₑₗ) apodisiert wird, wobei der mittlere Brechungsindex über die Gesamtheit der Gitter der Verknüpfung konstant ist und **dadurch gekennzeichnet, dass** das Einschreiben jedes einen elementaren Filter bildenden Gitters apodisiert wird.

6. Verfahren zum Einschreiben eines optischen Filters nach Anspruch 5, **dadurch gekennzeichnet, dass** die Bewegung des Spalts (60) zwischen zwei aufeinanderfolgenden Einschreibungen 1 bis 5 mm beträgt.

7. Optisches System für die Verstärkungsglättung, ein optisches Filter nach einem der Ansprüche 1 bis 4 umfassend.
